**Europäisches Patentamt**

**European Patent Office**

**Office européen des brevets**

(11) Veröffentlichungsnummer: **0 052 315**
**A2**

(12) # EUROPÄISCHE PATENTANMELDUNG

(21) Anmeldenummer: **81109543.9**

(22) Anmeldetag: **06.11.81**

(51) Int. Cl.³: **C 08 J 5/06**

(30) Priorität: **18.11.80 DE 3043426**

(43) Veröffentlichungstag der Anmeldung:
**26.05.82** Patentblatt **82/21**

(84) Benannte Vertragsstaaten:
**BE DE FR GB IT LU**

(71) Anmelder: **BAYER AG**
**Zentralbereich Patente, Marken und Lizenzen**
**D-5090 Leverkusen 1, Bayerwerk(DE)**

(72) Erfinder: **Albrecht, Klaus-Dieter, Dr.**
**Willi-Baumeister-Strasse 3**
**D-5090 Leverkusen(DE)**

(54) **Verfahren zur Imprägnierung von Textilcorden.**

(57) Verfahren zur Imprägnierung von Textilcorden durch Tränken des Textilcordes in zwei unterschiedlichen Imprägnier-Bädern, wobei das erste Imprägnierbad ein Isocyanat und das zweite Imprägnierbad ein Resorcin-Formaldehyd-Kautschuklatex enthält und jeweils nach erfolgter Tränkung sich anschließender Wärmebehandlung, das dadurch gekennzeichnet ist, daß das erste Imprägnierbad aus einer Lösung von Kautschuk und Polyisocyanat und/oder Polyepoxid in einem aliphatischen oder aromatischen oder chlorierten Kohlenwasserstoff besteht.

EP 0 052 315 A2

Croydon Printing Company Ltd.

BAYER AKTIENGESELLSCHAFT          5090 Leverkusen, Bayerwerk

Zentralbereich
Patente, Marken und Lizenzen   E/Kü-c


Verfahren zur Imprägnierung von Textilcorden


Die Erfindung betrifft ein Verfahren zur Imprägnierung von Textilcorden, die als Verstärkungsmaterialien in Kautschuk einvulkanisiert werden.

Textilien auf Basis Reyon, Polyamid, Polyester, Polyvinylalkohol, Glasfaser, Aramid, werden üblicherweise mit Latex-Bädern, die zusätzlich Resorcin-Formaldehyd-Harze (RFL) enthalten, imprägniert. Die Imprägnierschicht dient der Haftvermittlung zwischen Gummi und Textil. Die so imprägnierten Textilien weisen nur in der äußeren Randzone ca 1/10 - 1/30 des Cordquerschnitts diese RFL-Schicht auf, die dann während des Vulkanisationsprozesses die Gummihaftung vermittelt. Das Innere des Cordquerschnitts ist frei von RFL-Imprägnierung, wodurch die Corde oder Gewebe eine gute Flexibilität besitzen und wegen der erhaltenen gebliebenen Filamentstruktur eine hohe Ermüdungsbeständigkeit aufweisen.

Weiterhin sind für Textilien, wie Polyester oder Aramid, die aufgrund ihrer chemischen Natur nur eine geringe

Le A 20 673

Gummihaftung zeigen, sogenannte Zweibadimprägnierungen üblich. Dabei wird in der ersten, ebenfalls wäßrigen Imprägnierstufe, eine geringe Menge geblocktes Isocyanat oder Polyepoxid auf die Faser aufgebracht. Daran schließt sich eine Imprägnierung mit einem Resorcin-Formaldehyd-Latex an.

Für Gummiartikel, bei denen ein flexibles, weiches Textil, das völlig in Gummi eingebettet ist, gefordert ist, sind die auf obige Weise imprägnierten Textilien hervorragend geeignet.

Wird aber von diesen Textilien neben der Eigenschaft, die Dimensionsstabilität von Gummiartikeln zu gewährleisten, noch eine gut versteifende Wirkung, wie z.B. Draht zu besitzen oder sollen Textilien enthaltende Gummiartikel nach der Vulkanisation zugeschnitten werden (z.B. Keilriemen, Transportbänder), so sind die oben beschriebenen, imprägnierten Textilien nicht geeignet, da sie keine genügende Versteifung des Gummiartikels bewirken und bei Zuschnitten auf Grund der erhalten gebliebenen Filamentstruktur im inneren des Cordes oder Gewebes schnell zu einer Zerstörung des verstärkten Gummiartikels bei mechanischer Beanspruchung führen.

Um diesen Nachteil auszuschalten, wurden für das Einsatzgebiet flankenoffener Keilriemen, Textilcorde verwendet, die ebenfalls in 2 Stufen imprägniert waren. Dabei wurde Isocyanat in der ersten Stufe eingesetzt und in einer zweiten Stufe Resorcin-Formaldehyd-Latex (RFL) verwendet. Diese Corde zeigen zwar das gewünschte Verkleben der Einzelfilamente, sind aber wegen der vernetzenden Wirkung der Polyisocyanate wenig ermüdungsbeständig, auch ist der Klebfilm selbst recht spröde, so daß bei dynamischer Beanspruchung der spröde Film zerrieben und der gesamte Cord zerstört wird.

Es wurde nun ein Verfahren entwickelt, Corde oder Gewebe so zu imprägnieren, daß die Einzelfilamente im Garn oder Cord in eine feste, aber noch elastische Matrix eingebettet und mit dieser fest verbunden sind. Dieser so erhaltene durchimprägnierte Cord wird in einer zweiten Imprägnierstufe mit einer haftvermittelnden Resorcin-Formaldehyd-Latex-Schicht versehen. Hierzu werden die üblicherweise in der Gummiindustrie eingesetzten Festigkeitsträger, z.B. Gewebe oder Corde auf Basis Baumwolle, Reyon, Nylon, (Polyamid 6, Polyamid 6.6), Polyester (Polyethylenterephthalat) Aramid (m-phenylen-isophthalamid, p-phenylenterephthalamid) in zwei getrennten oder aber auch in einem Verfahrensschritt mittels zweier Bäder imprägniert. Nach dem Passieren eines jeden Bades erfolgt eine thermische Behandlung.

Das Bad der ersten Imprägnierstufe besteht aus der Lösung eines Kautschuks, z.B. Naturkautschuk, Polyisopren, Styrolbutadienkautschuk, Polychloropren, Nitrilkautschuk, bevorzugt Polychloropren und Natur-

Le A 20 673

kautschuk in einem geeigneten Lösungsmittel, z.B. aliphatischen, aromatischen oder chlorierten Kohlenwasserstoffen, z.B. Benzin, Benzol, Toluol, Estern z.B. Ethylacetat, Ketonen z.B. Methylethylketon, chlorierten Kohlenwasserstoffen z.B. Methylenchlorid, Perchlorethylen oder geeigneten Gemischen dieser Lösungsmittel (Lösung A). Die Kautschuklösung kann auch aus einer Kautschukmischung, die die üblichen Zusätze, wie Alterungsschutzmittel, Zinkoxid, Magnesiumoxid, Füllstoffe, Weichmacher, Schwefel und Beschleuniger enthält, hergestellt werden.

Die Kautschuklösung wird hergestellt durch Aufgeben und Plastizieren des Kautschuks auf ein Mischwalzwerk, gegebenenfalls Zugabe obiger Mischungszusätze, Herunterschneiden des Kautschukfelles und Lösen des Kautschuks bzw. der Kautschukmischung mit obigen Lösungsmitteln im Lösungskneter.

Die Konzentration des Kautschuks in der Lösung beträgt 1 - 25 Gew.-%, bevorzugt 5 - 15 Gew.-%. Dieser Kautschuk-Lösung werden als Vernetzer entweder Poly-Isocyanate, z.B. Hexamethylendiisocyanat, Diphenylmethandiisocyanat, Polymethylenphenylen polyisocyanat, Triphenylmethantriisocyanat, Thionophosphorsäure-tris-(p-isocyanatophenylester) zugegeben.

Der Isocyanatgehalt, bezogen auf den Kautschuk in der Lösung, beträgt 5 - 500 Gew.-%, bevorzugt 100 - 200 Gew.-%.

Le A 20 673

Der Kautschuklösung können statt der Isocyanate auch Polyepoxide, z.B. Glycringlycidether, Trimethylolpropantriglycidether, Polyethylenglykol diglycidether, Bisphenol-A-diglycidether, zugegeben werden. Der Polyepoxid-Gehalt bezogen auf Kautschuk beträgt 5 - 500 Gew.-%, bevorzugt 100 - 200 Gew.-%. Das Polyepoxid wird vorteilhafterweise beim Lösen des Kautschuks in den Lösungskneter gegeben.

Auch kombinierte Zusätze von Polyepoxid und Polyisocyanat sind wirksam.

Die gesamte Feststoffkonzentration der Lösung wird auf 5 - 25 Gew.-%, bevorzugt 10 - 15 Gew.-%, gegebenenfalls durch Zugabe weiterer Lösungsmittelmengen eingestellt.

Die textilen Festigkeitsträger werden mittels einer geeigneten Imprägniermaschine mit der oben beschriebenen Lösung imprägniert. Hierbei ist die Cord- oder Gewebespannung so einzustellen, daß ein gutes Eindringen der Imprägnierlösung in die Cord- oder Gewebestruktur möglich ist. Überschüssige Lösung wird durch Abstreifer oder Saugdüsen entfernt. Nach einer Trocknung der lösungsmittelfeuchten Textilien erfolgt eine thermische Behandlung bei 130 - 230°C, bevorzugt bei 180 - 220°C, wobei gegebenenfalls eine Verstreckung der Textilien erfolgen kann.

Le A 20 673

Die so vorbehandelten Textilien werden in einem zweiten Imprägnierschritt, der sich unmittelbar anschließend, aber auch später nach Zwischenlagerung erfolgen kann, mit einer Resorcin-Formaldehyd-Kautschuk-Latex (RFL)-Lösung behandelt.

Das Resorcin-Formaldehyd-Harz kann aus Resorcin und Formaldehyd-Lösung in üblicher Weise bereitet werden oder man verwendet marktgängige vorkondensierte Harze. Der Harzgehalt, bezogen auf Kautschukanteil des Latex sollte 15 - 35 Gew.-%, vorzugsweise 20 - 30 Gew.-%, betragen. Als Latex können Naturkautschuklatex, SBR-, Cr-, NBR-, Vinylpyridin (VP)-Latex oder geeignete Verschnitte verwendet werden.

Wegen der geringerern Dip-Aufnahme des vorbehandelten Textils, sollte der Dip-Trockengehalt etwas höher als üblich im Bereich 15 - 35 Gew.-%, vorzugsweise bei 20 - 30 Gew.-%, liegen. Die Auswahl des einzusetzenden Latex sollte sich nach dem Festkautschuk, in den das imprägnierte Textil einvulkanisiert wird, richten. Folgende Kombinationen sind empfehlenswert.

| Festkautschuk | Katuschuk für erste Imprägnierlösung | Latex für zweite Imprägnierstufe |
| --- | --- | --- |
| NR | NR | NR oder VP oder Verschnitte |
| SBR | NR oder SBR | NR, VP oder Verschnitte |

Le A 20 673

- 7 -

| Festkautschuk | Katuschuk für erste Imprägnierlösung | Latex für zweite Imprägnierstufe |
|---|---|---|
| CR | CR | CR oder VP |
| NBR | NBR | NBR |

Nach Durchlaufen des Imprägnierbades wird das Textil zunächst in einer Trockenzone getrocknet und anschließend bei einer Temperatur von 130 - 230°, vorzugsweise 150 - 180°C, das Harz kondensiert. Danach wird das Textil aufgewickelt und zur Konfektionierung der vorgesehenen Artikel verwendet.

Solchermaßen imprägnierte Festigkeitsträger können zur Herstellung von Keilriemen, speziell flankenoffenen Keilriemen, Transportbändern, Schläuchen, Membranen, KFz-Reifen, vor allem als Gürtelmaterial, verwendet werden.

Weiterhin lassen sich Corde, die wie beschrieben imprägniert wurden, anschließend zu "Cordgeweben" verarbeiten.

Die mit den so präparierten Textilien hergestellten Gummiartikel, lassen sich nachträglich zuschneiden, z.B. Keilriemen, Transportbänder, Schläuche, Membranen, ohne daß die in den Schnittflächen offen an der Oberfläche liegenden Textilien bei mechanischer Beanspruchung

Le A 20 673

herausgelöst oder zerfasert werden. Bei Einsatz als Gürtelmaterial im KFz.-Reifen führen diese Textilien zu einer erwünschten Versteifung der Lauffläche, ähnlich Stahlcord, bieten jedoch den Vorteil der Gewichtsreduzierung.

Die Erfindung wird nachstehend an Hand von Beispielen erläutert.

Die in folgenden Beispielen ausgeführte Imprägnierung wurde in zwei Stufen auf das Textilmaterial aufgebracht. Die Rezeptur für die erste Imprägnierstufe setzt sich aus Teillösung A zusammen, aus der durch Zugabe von Isocyanat und Lösungsmittel die Imprägnierlösung für die erste Imprägnierung bereitet wird.

Le A 20 673

Beispiel 1
Teillösung A

| | |
|---|---|
| Polychloroprenkautschuk | 100 Gew.Teile |
| Magnesiumoxid | 7 " |
| Methylenchlorid | 963 " |
| | 1.070 " |

Polychloropren wurde bis zur Fellbildung auf ein Laborwalzwerk gegeben und dann das Magnesiumoxid eingemischt. Anschließend wurde diese Mischung in einem Laborlösungskneter mit 963 Gew.Teile Methylenchlorid in Lösung gebracht. Aus dieser Lösung wurde die Imprägnierlösung für die erste Imprägnierstufe nach folgender Rezeptur bereitet:

| | |
|---|---|
| Teillösung A (10 % Feststoff) | 100 Gew.Teile |
| Triphenylmethantriisocyanat (20 %ig in Methylenclorid) | 100 " |
| Methylenchlorid | 40 " |
| | 240 " |

Ein Polyestercord (dtex 1100/3 x 3) wurde auf einer Laborimprägniermaschine unter folgenden Bedingungen imprägniert.

| | |
|---|---|
| Vortrockner Temperatur | 170°C |
| Kondensations-Temperatur | 210°C |
| Imprägniergeschwindigkeit | 1 m/Min |

Le A 20 673

| | | |
|---|---|---|
| Verweilzeit im Kondensationskammer | 0,5 | Min |
| Cordbelastung Imprägnierung | 1,5 | kg |
| Cordbelastung Kondensationskammer | 15 | kg |

Der so in der ersten Imprägnierstufe vorbereitete Cord, der eine völlige Durchtränkung zeigt und dadurch bereits eine drahtartige Versteifung zeigt, wird anschließend in einer 2. Imprägnierung mit einem RFL-Bad folgender Rezeptur behandelt.

| | | | |
|---|---|---|---|
| Polychloropren-Latex 58 %ig | 172 | Gew.Teile | 100 Feststoff-gehalt |
| Resorcin-Formaldehyd-Vor-kondensat (40 %ig) | 50 | " | 20 " |
| Formalin 30 %ig | 20 | " | 6 " |
| Wasser | 262 | " | - |
| | 504 | " | 126 " |

| | |
|---|---|
| Harzgehalt | 20 Gew.-% |
| $CH_2O$ bezogen auf Harz | 30 Gew.-% |
| Gesamt-Trockengehalt | 25 Gew.-% |

Imprägnierbedingungen:

| | |
|---|---|
| Vortrockner-Temperatur: | 120°C |
| Kondensations-Temperatur | 170°C |
| Imprägniergeschwindigkeit | 4 m/Min. |
| Verweilzeit | 1 Min. |
| Cordbelastung Imprägnierung | 15 kg |
| Cordbelastung Kondensations-kammer | 15 kg |

Le A 20 673

Der auf diese Weise im Zweistufenverfahren imprägnierte Cord zeigt gute drahtartige Versteifung, gute Schnitt- und Verletzungsfestigkeit (keine Auffasern der Filamente) und sehr gute Gummi-Haftung.

Der Dip-Auftrag für beide Stufen betrug 13,6 % (1. Stufe = 8,3 %).

Die Haftprüfung erfolgte durch Einvulkanisieren des Cordes in eine Polychloroprenmischung folgender Rezeptur

| | | |
|---|---|---|
| Polychloropren | 100 | Gew.Teile |
| Polybutadien | 3 | " |
| Stearinsäure | 3 | " |
| Magnesiumoxid | 4 | " |
| Styrolisiertes Diphenylamin | 2 | " |
| N.Phenyl-N'-1,3-dimethylbutyl p-phenylendiamin | 1 | " |
| gefällte Kieselsäure | 10 | " |
| Ruß | 25 | " |
| aromat. Polyäther | 5 | " |
| Zinkoxid | 5 | " |
| Schwefel | 0,5 | " |
| Hexamethylolmelamin pentamethyläther-Kieselsäure (1:1) | 4,6 | " |
| Resorcindiacetat-Kieselsäure (1:1) | 8 | " |

und Anwendung des T-Testes (s. Bayer-Mitt.f.d.Gummi-Industrie Nr. 29). Der ermittelte Haftwert betrug 335 N / 20 mm.

Le A 20 673

Beispiel 2
Teillösung A

| | |
|---|---:|
| Kautschuk (Polychloropren) | 100 Gew.-Teile |
| Magnesiumoxid | 7 " |
| Polyepoxid | 100 " |
| Perchlorethylen | 1.863 " |
| | 2.070 Gew.-Teile |

Polychloropren wurde bis zur Fellbildung auf ein Laborwalzwerk gegeben und dann das Magnesiumoxid eingemischt. Anschließend wurde diese Mischung in einem Laborlösungskneter mit 1863 Gew.-Teile Perchlorethylen in Lösung gebracht und dann das Polyepoxid gelöst in 100 ml Perchlorethylen zugegeben.

Aus dieser Lösung wurde die Imprägnierlösung für die erste Imprägnierstufe nach folgender Rezeptur bereitet.

| | |
|---|---:|
| Teillösung A (10 % Feststoffgehalt) | 100 Gew.Teile |
| Triphenylmethantriisocyanat 20 %ig | 100 " |
| Perchlorethylen | 40 " |

Ein Polyestercord (dtex 1100 / 3 x 3) wurde auf einer Laborimprägniermaschine unter folgenden Bedingungen imprägniert.

| | |
|---|---|
| Vortrockner-Temperatur | 170°C |
| Kondensations-Temperatur | 210°C |
| Imprägniergeschwindigkeit | 1 m/Min. |
| Verweilzeit in Kondensations-Kammer | 0,5 Min. |

Le A 20 673

| Cordbelastung Imprägnierung | 2 kg |
|---|---|
| Cordbelastung Kondensations-Kammer | 15 kg |

Der auf diese Weise in einer ersten Imprägnierstufe vorbereitete Cord, der eine völlige Durchtränkung aufweist und dadurch Steifigkeit und Kompaktheit aufweist, wird anschließend in einer 2. Imprägnierung mit einem RFL-Bad folgender Rezeptur behandelt:

| Polychloropren-Latex 58 %ig | | 172 Gew.Teile | 100 Feststoffgehalt |
|---|---|---|---|
| vork. Resorcin | | | |
| Formaldehyd-Harz | 40 %ig | 50 " | 20 " |
| Formalin | 30 %ig | 20 " | 6 " |
| Wasser | | 262 " | – " |
| | | 504 | 126 |

| Harz-Gehalt | 20 Gew.-% |
|---|---|
| CH$_2$O bezogen auf Harz | 30 Gew.-% |
| Gesamt-Trocken-Geh. | 25 Gew.-% |

Folgende Imprägnierbedingungen lagen vor:

| Vortrockner Temperatur | 120°C |
|---|---|
| Kondensations-Temperatur | 170°C |
| Imprägniergeschwindigkeit | 4 m/Min. |
| Verweilzeit | 1 Min. |
| Cordbelastung Imprägnierung | 15 kg |
| Cordbelastung Kondensations-Kammer | 15 kg |

Le A 20 673

Der so imprägnierte Cord zeigt eine sehr gute Steifigkeit, sehr gute Schnitt- und Verletzungsfestigkeit (kein Auffasern der Filamente), geringe Dehnung und gute dynamische Beständigkeit durch Einbettung der Filamente in Gummimatrix, sehr gute Gummi-Haftung.

Als Vergleich wurde ein konventionell nur mit RFL imprägnierter Cord gleicher Konstruktion herangezogen. Die dynamische Beständigkeit wurde nach den in Bayer Mitt. für die Gummiindustrie Nr. 29 beschriebenen Methoden Knickermüdung und Dauerschlag geprüft. Ein nicht vorbehandelter Cord lief als Vergleich mit.

|  | Rohcord | RFL-impräg. Cord | Erfindungs- gem. Cord |
|---|---|---|---|
| Knickermüdung (Anzahl der Biegungen bis Bruch) | 177.000 | 41.000 | 91.000 |
| Dauerschlag (Anzahl der Schläge bis Bruch) | 37.412 | 369 | 14.309 |

Die Haftprüfung wurde nach dem ebenfalls in 1.c. beschriebenen T-Test durchgeführt.

Dazu wurde der Cord in eine Polychloroprenmischung folgender Rezeptur bei 150°C einvulkanisiert.

| Polychloropren | 100 | Gew.Teile |
|---|---|---|
| Zinkoxid | 5 | " |
| Stearinsäure | 1,5 | " |
| Phenyl-naphthylamin | 2 | " |

Le A 20 673

- 15 -

| gefällte Kieselsäure | 30 | Gew.Teile |
|---|---|---|
| Klebrigmacher-Harz | 4 | " |
| Methylen-bis-thioglykolsäure-bis-n-buylester | 5 | " |
| Magnesiumoxid | 4 | " |
| Cyclohexylmercaptobenthiazyl-sulfenamid | 0,5 | " |
| Tetramethylthiurammonosulfid | 1 | " |
| Di'-O-tolylguanidin | 1 | " |
| Gemisch-Resorcin und Hexamethylol-melaminpentamethyläther (1:1) | 5 | " |

Folgende Haftwerte wurden im T-Test (s. Bayer Mitt.f.d. Gummi-Ind. Nr. 29) bei einer Prüftemperatur von 80°C und 100 mm/Min. Klemmenvorschub gemessen.

| | Rohcord | RF-Latex Impräg-nierung | Erfindungs-gemäße Im-prägnierung |
|---|---|---|---|
| Haftwert (N/20) | 217 | 324 | 421 |

Le A 20 673

- 16 -

Patentansprüche

1) Verfahren zur Imprägnierung von Textilcorden durch Tränken des Textilcordes in zwei unterschiedlichen Imprägnier-Bädern, wobei das erste Imprägnierbad ein Isocyanat und das zweite Imprägnierbad ein Resorcin-Formaldehyd-Kautschuklatex enthält und jeweils nach erfolgter Tränkung sich anschließender Wärmebehandlung, dadurch gekennzeichnet, daß das erste Imprägnierbad aus einer Lösung von Kautschuk und Polyisocyanat und/oder Polyepoxid in einem aliphatischen oder aromatischen oder chlorierten Kohlenwasserstoff besteht.

2) Verfahren gemäß Anspruch 1, dadurch gekennzeichnet, daß das erste Imprägnierbad einen Gesamtfeststoffgehalt von 5 bis 25 Gew.-% aufweist.

3) Verfahren gemäß Anspruch 1, dadurch gekennzeichnet, daß das erste Imprägnierbad einen Gesamtfeststoffgehalt von 10 - 15 Gew.-% aufweist.

4) Verfahren nach Ansprüchen 1 und 2, dadurch gekennzeichnet, daß die Konzentration des Kautschuks im ersten Imprägnierbad 1 - 25 Gew.-% beträgt.

5) Verfahren nach Ansprüchen 1 und 3, dadurch gekennzeichnet, daß die Konzentration des Kautschuks im ersten Imprägnierbad 5 - 15 Gew.-% beträgt.

Le A 20 673

6) Verfahren nach Ansprüchen 1 - 5, dadurch gekennzeichnet, daß der Polyisocyanat und/oder der Polyepoxidgehalt der Lösung jeweils 5 - 50° Gew.-% bezogen auf Kautschuk beträgt.

7) Verfahren nach Ansprüchen 1 - 5, dadurch gekennzeichnet, daß der Polyisocyanat und/oder Polyepoxidgehalt der Lösung jeweils 100 - 200 Gew.-% bezogen auf Kautschuk beträgt.

8) Verfahren nach Anspruch 1, dadurch gekennzeichnet, daß das zweite Imprägnierbad einen Feststoffgehalt von 15 bis 35 Gew.-% aufweist.

9) Verfahren nach Anspruch 1, dadurch gekennzeichnet, daß die Wärmebehandlung nach jedem Imprägniervorgang bei einer Temperatur von 130 - 230°C durchgeführt wird.

Le A 20 673